Europäisches Patentamt

European Patent Office

Office européen des brevets

(19)

(11) Numéro de publication : **0 169 102**
**B1**

# (12) FASCICULE DE BREVET EUROPÉEN

(45) Date de publication du fascicule du brevet :
17.05.89

(51) Int. Cl.⁴ : **G 01 N   1/00**

(21) Numéro de dépôt : **85401142.6**

(22) Date de dépôt : **11.06.85**

(54) **Dispositif utilisable notamment pour la pyrolyse d'échantillons solides ou liquides preleves en faible quantité.**

(30) Priorité : **18.06.84 FR 8409622**

(43) Date de publication de la demande :
**22.01.86 Bulletin 86/04**

(45) Mention de la délivrance du brevet :
**17.05.89 Bulletin 89/20**

(84) Etats contractants désignés :
**BE DE GB IT NL**

(56) Documents cités :
**GB-A- 2 049 178**
**US-A- 3 743 831**
**US-A- 3 889 538**
**US-A- 4 128 008**
**US-A- 4 408 125**

(73) Titulaire : **INSTITUT FRANCAIS DU PETROLE**
**4, Avenue de Bois-Préau**
**F-92502 Rueil-Malmaison (FR)**

(72) Inventeur : **Behar, Françoise**
**24, rue des Favorites**
**F-75015 Paris (FR)**
Inventeur : **Roucache, Jeannine**
**15, rue Philippe Lebon**
**F-78150 Le Chesnay (FR)**
Inventeur : **Auger, Jean**
**3, allée des Anémones**
**F-91410 Dourdan (FR)**
Inventeur : **Boudet, Luc**
**47, rue Alexandre Bickart**
**F-77500 Chelles (FR)**

(74) Mandataire : **Aubel, Pierre et al**
**Institut Français du Pétrole Département Brevets 4,**
**avenue de Bois Préau**
**F-92502 Rueil-Malmaison (FR)**

## Description

La présente invention résulte de travaux réalisés à l'Institut Français du Pétrole par Mesdames Françoise Behar et Jeannine Roucache et à la Société DELSI Instruments par Messieurs Jean Auger et Luc Boudet.

Cette invention concerne un dispositif utilisable pour le chauffage, et plus particulièrement la pyrolyse, d'échantillons solides ou liquides prélevés en faible quantité.

Le dispositif selon l'invention est particulièrement intéressant pour réaliser la pyrolyse suivie de l'analyse chromatographique de matières organiques pures (asphaltène, kérogène, charbon), ou dispersées dans une matrice minérale (sédiments récents, roches-mères), par exemple en vue d'établir une relation entre la composition de la fraction hydrocarbure d'une huile brute et son pyrolysat d'asphaltènes, pour établir une corrélation entre les pyrolysats de kérogène et les asphaltènes extraits de la même roche-mère, ou bien pour connaître la modification de ces pyrolysats avec l'évolution géologique (fonction de la profondeur dans une même formation), ces techniques pouvant être éventuellement utilisées pour réaliser des corrélations entre l'huile brute et la roche-mère et des corrélations entre huiles brutes.

Les applications indiquées ci-dessus sont cependant données seulement à titre d'exemples et ne doivent donc pas être considérées comme limitant de manière trop stricte le domaine d'application du dispositif selon l'invention.

On connaît déjà des dispositifs utilisables pour la pyrolyse d'échantillons prélevés en faible quantité, ces dispositifs comprenant une chemise tubulaire à l'intérieur de laquelle est définie une zone de chauffage de l'échantillon, des moyens de chauffage et des moyens de mesure de la température dans ladite zone, un porte-échantillon adapté à être introduit dans ladite chemise tubulaire jusqu'à ladite zone de chauffage. Ladite chemise tubulaire a un orifice de sortie des effluents qui se raccorde à des appareils de mesure et d'analyse. Ces dispositifs comportent un orifice d'introduction d'un gaz vecteur servant à entraîner ces effluents, lesdits orifices étant situés de part et d'autre de ladite zone de chauffage.

Le porte-échantillon est associé à une canne qui s'engage dans ladite chemise tubulaire.

L'inconvénient principal de certains de ces dispositifs antérieurs est que l'échantillon soumis à la pyrolyse se trouve situé dans un espace confiné. Cet espace confiné est par exemple constitué d'une nacelle munie d'un couvercle, ce qui ne permet pas un balayage total de l'échantillon par le gaz vecteur.

Un autre inconvénient des dispositifs antérieurs est qu'ils présentent un volume mort relativement important entre le four de pyrolyse et le piège où sont retenus les produits de pyrolyse ou l'appareil de mesure ou/et d'analyse auquel le four est relié.

Le brevet GB 2 049 178 décrit un dispositif comportant une canne porte-échantillon adaptée à être introduite dans ladite chemise tubulaire jusqu'à ladite zone de chauffage. Cette canne, qui est creuse, ne s'ouvre pas sur la paroi latérale de l'espace annulaire situé entre elle et la chemise tubulaire.

Ces inconvénients sont supprimés, selon l'invention, avec un dispositif du type indiqué ci-dessus dans lequel il subsiste entre ladite canne et ladite chemise un espace annulaire réduit pour l'écoulement du gaz vecteur, ladite canne présentant une cavité allongée s'ouvrant sur sa paroi latérale dans ledit espace annulaire, ladite cavité étant de faible volume et adaptée à recevoir l'échantillon. Des moyens d'étanchéité et de positionnement de ladite cavité dans ladite chemise tubulaire s'adaptent à ladite canne à une extrémité de ladite chemise tubulaire.

Ladite chemise tubulaire et ladite canne porte-échantillon seront de préférence disposées suivant une direction sensiblement horizontale, ladite cavité recevent l'échantillon étant placée de façon à s'ouvrir vers le haut.

Selon, un mode particulièrement avantageux de réalisation, lesdits moyens d'étanchéité et de positionnement comprennent une bague compressible dans laquelle peut coulisser ladite canne, cette bague coopérant avec un organe d'obturation qui est verrouillable, par exemple par vissage, à ladite extrémité de ladite chemise tubulaire, assurant simultanément par compression de ladite bague l'étanchéité entre ladite canne et ladite chemise et l'immobilisation de l'échantillon dans une position choisie à l'avance à l'intérieur de ladite chemise tubulaire.

Ladite canne sera de préférence déplaçable entre une première position dans laquelle ladite cavité contenant l'échantillon est située dans une zone à température modérée de ladite chemise tubulaire et une seconde position, dans laquelle ladite cavité est située dans ladite zone de chauffage.

Des moyens de refroidissement, tels qu'un radiateur seront avantageusement disposés au niveau de ladite zone à température modérée de ladite chemise tubulaire.

La paroi de l'alésage de ladite chemise tubulaire, ainsi que celle de ladite canne seront constituées en un matériau inerte chimiquement vis-à-vis des effluents de la pyrolyse.

Selon un mode tout particulièrement préféré de réalisation, ladite chemise tubulaire présente un alésage dont la paroi est en or, ladite canne étant également en or.

Ladite canne pourra avantageusement comporter des moyens de repérage de la position de ladite cavité recevant l'échantillon le long et autour de l'axe de ladite chemise tubulaire lorsque ladite canne est engagée dans ladite chemise.

Des exemples de réalisation de dispositifs selon l'invention sont illustrés par les figures annexées, parmi lesquelles :

— la figure 1 représente une vue d'ensemble d'un premier mode de réalisation de ce dispositif,

— la figure 2 représente un autre mode de réalisation, de taille réduite, ou micropyrolyseur,

— les figures 3A et 3B sont des coupes schématiques montrant respectivement la canne porte-échantillon dans une première position, où l'échantillon est placé dans une zone « froide » et dans une seconde position, où cet échantillon est situé dans la zone de chauffage,

— la figure 4 représente la canne porte-échantillon équipée des moyens d'étanchéité et de positionnement ainsi que de sa clé de manipulation, et

— les figures 4A et 4B sont des vues de détail à plus grande échelle des extrémités de cette canne porte-échantillon.

Sur les différentes figures, où les mêmes références numériques ont été utilisées pour désigner les mêmes organes, la référence 1 désigne, dans son ensemble, un four tubulaire, constitué par exemple en alliage Monel, et dont l'alésage a une paroi formée par une chemise tubulaire interne 2 à l'intérieur de laquelle est définie une zone de chauffage 3 de l'échantillon.

La référence 4 désigne des moyens de chauffage du four, tels qu'une résistance électrique et la référence 5 des moyens de mesure de la température dans la zone de chauffage 3 (thermocouple).

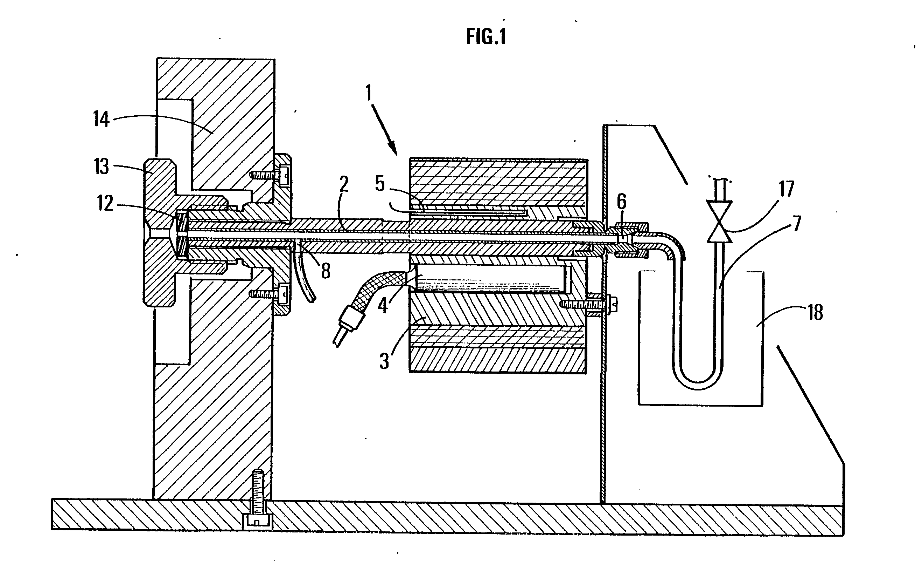

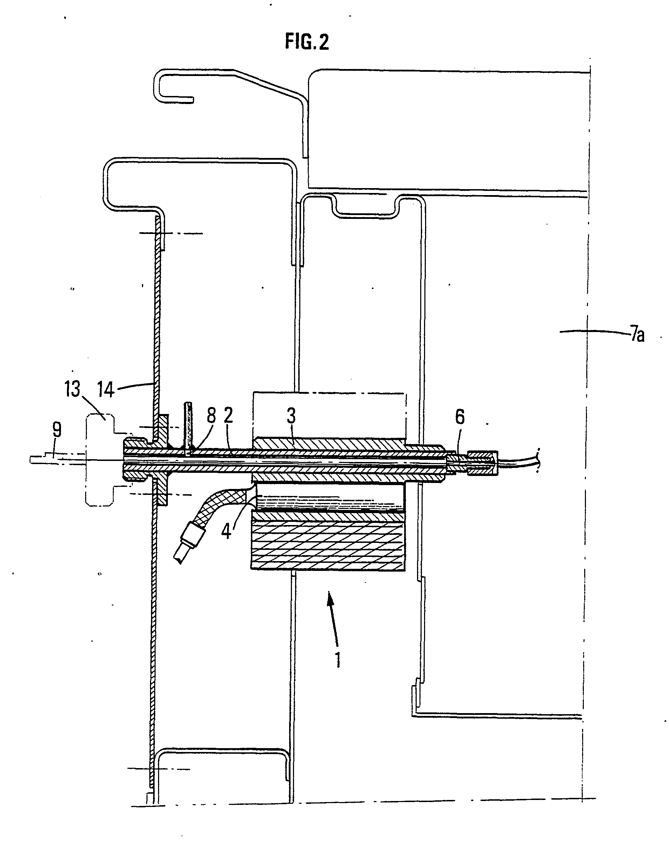

La chemise tubulaire 2 a un orifice de sortie 6 des effluents qui se raccorde à un ou plusieurs pièges 7 (Fig. 1) ou/et à des appareils 7a de mesure et d'analyse, tels qu'un appareil de chromatographie en phase gazeuse (Fig. 2), et un orifice 8 d'introduction d'un gaz vecteur (argon par exemple) servant à entraîner ces effluents.

L'appareil 7a pourra également, par exemple, être constitué par un détecteur à ionisation de flamme.

Les orifices 6 et 8 sont situés de part et d'autre de la zone de chauffage 3.

Le porte-échantillon est essentiellement constitué d'une canne 9 qui s'engage dans la chemise tubulaire 2 en laissant subsister un espace annulaire réduit 10 pour l'écoulement du gaz vecteur.

La canne porte-échantillon 9 présente une cavité allongée 11 de faible volume, ou rigole, s'ouvrant sur la paroi latérale de la canne. Dans l'exemple illustré, cette cavité est de forme très allongée adaptée à recevoir l'échantillon S en couche de très faible épaisseur. Le four 1 étant disposé de façon sensiblement horizontale, la canne 9 est disposée dans la chemise 2 de façon que la cavité 11 recevant l'échantillon s'ouvre vers le haut. Cette disposition permet de réduire le plus possible le volume mort à l'intérieur du four tubulaire 1.

Le dispositif comporte également des moyens d'étanchéité et de positionnement de ladite cavité 11 dans la chemise tubulaire 2, ces moyens s'adaptant à une extrémité de la chemise 2.

Dans l'exemple illustré, ces moyens comprennent une bague compressible 12 dans laquelle peut coulisser la canne 9, cette bague coopérant avec un organe 13 d'obturation du four qui est verrouillable, par exemple par vissage, à l'extrémité de ce four en assurant alors simultanément par compression de la bague 12, l'étanchéité entre la canne 9 et la chemise 2 ainsi que l'immobilisation de la cavité 11, donc de l'échantillon S, dans une position choisie à l'avance à l'intérieur de la chemise tubulaire 2.

Le dispositif décrit ci-dessus présente l'avantage de ne comporter aucune vanne ni aucun organe diviseur de flux sur le trajet des effluents de pyrolyse.

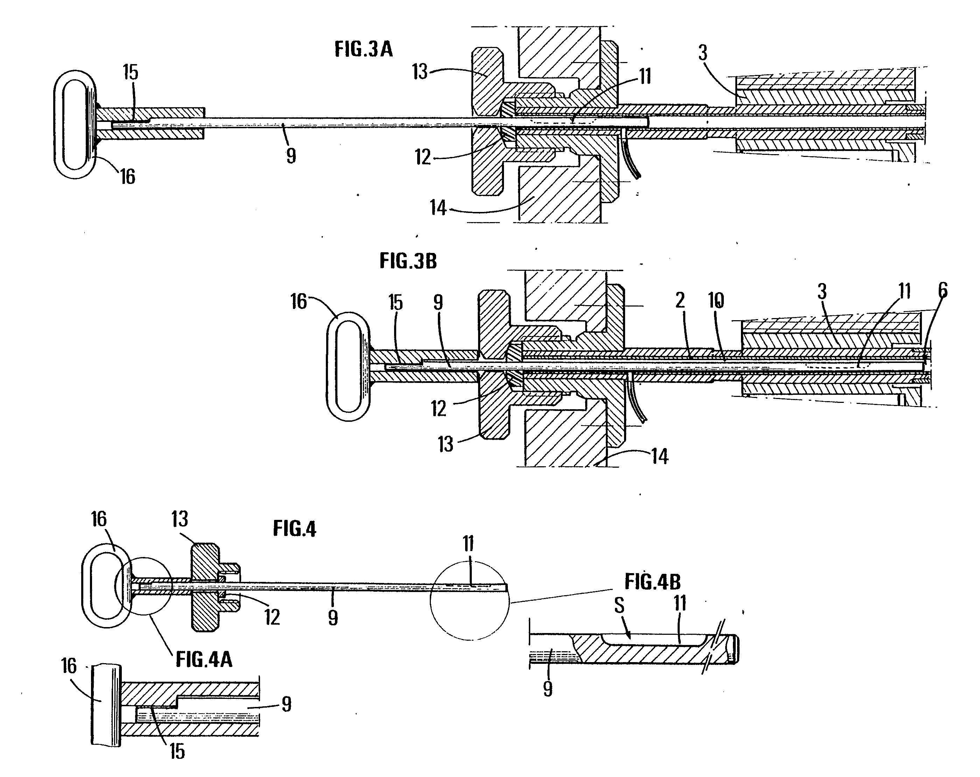

La canne porte-échantillon 9 est déplaçable entre une première position (Fig. 3A) dans laquelle la cavité 11 contenant l'échantillon S est située dans une zone à température modérée de la chemise tubulaire 2 et une seconde position (Fig. 3B) dans laquelle ladite cavité 11 est située dans ladite zone de chauffage 3.

Des moyens de refroidissement, constitués d'un radiateur 14, sont situés au niveau de ladite zone à température modérée, ou « zone froide » de la chemise tubulaire.

Selon un mode tout particulièrement préféré de réalisation la chemise 2, ou tout au moins sa paroi interne est en or, de même que ladite canne.

Ce mode de réalisation où la chemise 2 et la canne 9 sont en or présente les avantages suivants :

a) pas de risques de réaction chimique entre la canne et l'échantillon, la cavité 11 peut être facilement nettoyée après chaque essai, par exemple par un jet d'oxygène à 550 °C qui brûle les résidus ;

b) réduction du gradient de température tout au long de la chemise 2 (par exemple lorsqu'on a 550 °C dans la zone de chauffage, la température à la sortie du four est d'environ 400 °C, alors qu'elle ne serait que de 300 °C environ si la chemise 2 était en alliage Monel comme la gaine tubulaire 1).

Ceci supprime les risques de condensation des produits lourds des effluents de pyrolyse entre la zone de chauffage 3 et le piège 7 ou les appareils de mesure et de détection 7a raccordés à la sortie du four. Cet avantage est essentiel dans l'exemple de la pyrolyse, des asphaltènes ou des kérogènes, où les produits lourds peuvent représenter jusqu'à 70 % des effluents.

Avec la construction adoptée (chemise 2 en or), ces produits lourds atteignent le piège 7 ou les appareils de mesure et d'analyse 7a.

c) facilité d'introduction de la canne porte-échantillon 9 dans la chemise 8.

L'expérience montre, en effet, qu'en raison du faible jeu annulaire entre ces éléments, une canne en acier inoxydable peut, en se tordant, se coincer dans la chemise 2 et ne plus pouvoir être réintroduite dans cette chemise, alors qu'une canne en or, métal malléable, est toujours aisément engagée et retirée.

Des moyens de repérage de la position de la cavité 11 à l'intérieur de la chemise 2 et autour de l'axe de cette dernière lorsque la canne 9 est engagée dans cette chemise comprennent un méplat 15 ménagé sur la canne 9. Ce méplat permet en particulier de positionner la canne 9 de façon que la cavité 11 contenant l'échantillon S s'ouvre vers le haut.

La position du méplat 15 est déterminée de façon que celui-ci reste à l'extérieur de la chemise 2 lorsque la canne 9 est engagée dans celle-ci, la cavité 11 étant positionnée dans la zone de chauffage 3.

Un organe de manipulation ou clé 16 s'adapte à l'extrémité de la canne 9 opposée à celle engagée dans la chemise 2 (Figs 4 et 4A). Cette clé est adaptée à limiter l'enfoncement de la canne 9 dans la chemise 2 en venant en butée contre l'organe d'obturation 13 dans la position illustrée par la figure 3B.

Afin de limiter le plus possible le volume mort dans le four au cours de la pyrolyse, la longueur de la canne 9 est avantageusement choisie de façon que dans sa position d'enfoncement illustrée par la figure 3B, l'extrémité de cette canne engagée dans la chemise 2 atteigne sensiblement l'orifice 6 de sortie des effluents.

On va indiquer ci-après des exemples de modes opératoires du dispositif qui vient d'être décrit.

On pèse la canne porte-échantillon 9 avant et après avoir placé l'échantillon S dans la cavité 11 (Fig. 4B).

On introduit dans le four l'extrémité de la canne 9 proche de la cavité 11, l'autre extrémité de cette canne étant engagée dans la bague compressible 12 (par exemple en silicone) disposée dans l'organe d'obturation 13 (Fig. 4) que l'on visse à l'extrémité du four 1 située au niveau du radiateur 14.

La bague 12 étant située dans cette zone « froide » du four ne risque pas de libérer des produits polluants au cours de la montée en température du four.

Tant que l'organe 13 n'est pas vissé à fond, la canne 9 peut coulisser dans la bague 12 et la cavité 11 peut être placée dans la zone « froide » du four en regard du radiateur 14.

Dans le mode de réalisation de l'invention illustré par la figure 1, on utilisera, par exemple, une quantité d'échantillon comprise entre 5 et 100 milligrammes et dans le mode de réalisation illustré par la figure 2, ou micropyrolyseur, une quantité d'échantillon comprise entre 25 et 200 microgrammes.

Le gaz vecteur (argon par exemple) est admis juste derrière le radiateur 14, le plus près possible de l'entrée du four, ce qui réalise un balayage éliminant l'air résiduel contenu dans le four.

La sortie du four peut être raccordée directement à un appareil de chromatographie en phase gazeuse, mais dans l'exemple illustré cette sortie est connectée à un piège 7 de type connu dont l'orifice de sortie est équipé d'une vanne 17 placée en position d'ouverture au cours de cette étape de balayage, ce qui permet au gaz vecteur de s'échapper.

Cette étape étant terminée, soit on pousse la canne 9 dans le four froid jusqu'à positionner l'échantillon dans la zone de chauffage 3 (position repérée par le méplat 15), puis on programme la montée en température du four, soit on préchauffe le four avant de pousser la canne. Dans ce dernier cas, on réalise une mise en température quasi-immédiate (semi-flash) de l'échantillon, en raison de la conductivité thermique de l'or.

Dans les deux cas, le blocage de l'organe d'obturation 13 assure à la fois l'étanchéité et l'immobilisation de l'échantillon S dans la zone de chauffage 3.

Avant toute pyrolyse, on s'assure que l'échantillon ne contient pas de fraction vaporisable en le soumettant à un préchauffage avant de commencer la programmation élevant la température de l'échantillon S jusqu'à 550 °C, par exemple.

Alternativement, après avoir réalisé ce préchauffage, on retire la canne pour replacer l'échantillon en zone froide (après avoir légèrement dévissé l'organe d'obturation 13).

On chauffe ensuite le four jusqu'à 550 °C, par exemple, avant de replacer l'échantillon S dans la zone de chauffage 3 du four.

La vanne de sortie du piège 7 est fermée durant l'opération de chauffage et le piège 7 est entouré d'une coupelle 18 refermant de l'azote liquide.

L'argon sortant du four se liquéfiant au contact de l'azote liquide, les produits de pyrolyse se condensent avec l'argon dans le piège.

Un tel résultat ne pourrait être obtenu si le gaz vecteur était de l'hélium, car ce gaz ne se condense pas au contact de l'azote liquide et créerait une surpression dans cette position de fermeture de la vanne de sortie 17.

Le chauffage est arrêté lorsqu'on estime que la pyrolyse est terminée (au bout de 5 minutes, par exemple) et on ouvre la vanne 17 pour laisser l'argon résiduel s'échapper.

on sépare alors le piège 7 du four par dévissage, tout en le laissant dans la coupelle 18 afin qu'il se réchauffe lentement en libérant peu à peu l'argon qu'il contient (vanne 17 ouverte).

A la fin, seuls les produits liquides et solides de la pyrolyse restent dans le piège 7 ($C_6+$ dans le cas d'hydrocarbures).

On introduit alors dans le piège 7 un solvant tel que du pentane et on prélève avec une seringue une certaine quantité de la solution obtenue que l'on injecte dans un appareil d'analyse par chromatographie en phase gazeuse.

On peut également introduire dans le piège 7 du chloroforme et peser la solution obtenue dans une nacelle en aluminium avant d'effectuer une chromatographie en phase liquide, en vue de fractionner les effluents de pyrolyse.

Dans le cas où les produits de pyrolyse sont des hydrocarbures, cette chromatographie en phase liquide peut permettre de séparer les produits de pyrolyse en trois familles : hydrocarbures saturés, hydrocarbures aromatiques, produits lourds.

On peut ensuite faire une analyse fine des produits de chacune de ces familles par chromatographie en phase gazeuse ou spectrométrie de masse.

## Revendications

1. Dispositif utilisable notamment pour la pyrolyse d'échantillons solides ou liquides prélevés en faible quantité, comprenant une chemise tubulaire à l'intérieur de laquelle est définie une zone de chauffage de l'échantillon, des moyens de chauffage et des moyens de mesure de la température dans ladite zone, un porte-échantillon adapté à être introduit dans ladite chemise tubulaire jusqu'à ladite zone de chauffage, ladite chemise tubulaire ayant un orifice de sortie des effluents, qui se raccorde à au moins un piège ou/et appareil de mesure et d'analyse, ce dispositif comportant également un orifice d'introduction d'un gaz vecteur servant à entraîner ces effluents, lesdits orifices étant situés de part et d'autre de ladite zone de chauffage, ledit porte-échantillon étant associé à une canne qui s'engage dans ladite chemise tubulaire, caractérisé en ce qu'il subsiste entre ladite canne (9) et ladite chemise (2) un espace annulaire réduit (10) pour l'écoulement du gaz vecteur, ladite canne présentant une cavité allongée (11) s'ouvrant sur la paroi latérale de la canne dans ledit espace annulaire et adaptée à recevoir l'échantillon (S) et en ce que des moyens (12, 13) d'étanchéité et de positionnement de ladite cavité (11) dans ladite chemise tubulaire (2) s'adaptent à ladite canne (9) à une extrémité de ladite chemise tubulaire.

2. Dispositif selon la revendication 1, caractérisé en ce que ladite chemise tubulaire (2) et ladite canne porte-échantillon (9) sont disposées suivant une direction sensiblement horizontale, ladite cavité (11) recevant l'échantillon (S) étant placée de façon à s'ouvrir vers le haut.

3. Dispositif selon l'une quelconque des revendications précédentes, caractérisé en ce que lesdits moyens d'étanchéité et de positionnement comprennent une bague compressible (12) dans laquelle peut coulisser ladite canne (9), cette bague (12) coopérant avec un organe d'obturation (13) qui est verrouillable, par exemple par vissage, à ladite extrémité de ladite chemise tubulaire (2), assurant simultanément par compression de ladite bague (12) l'étanchéité entre ladite canne (9) et ladite chemise (2) et l'immobilisation de l'échantillon (S) dans une position choisie à l'avance à l'intérieur de ladite chemise tubulaire (2).

4. Dispositif selon l'une quelconque des revendications précédentes, caractérisé en ce que ladite canne (9) est déplaçable entre une première position dans laquelle ladite cavité (11) contenant l'échantillon (S) est située dans une zone à température modérée de ladite chemise tubulaire et une seconde position, dans laquelle ladite cavité est située dans ladite zone de chauffage (3).

5. Dispositif selon la revendication 4, caractérisé en ce que des moyens de refroidissement, tels qu'un radiateur (14), sont disposés au niveau de ladite zone à température modérée de ladite chemise tubulaire (2).

6. Dispositif selon l'une quelconque des revendications précédentes, caractérisé en ce que ladite chemise tubulaire (2) présente un alésage dont la paroi est en or et en ce que ladite canne est également en or.

7. Dispositif selon l'une quelconque des revendications précédentes, caractérisé en ce que ladite canne (9) comporte des moyens de repérage de la position de ladite cavité (11) recevant l'échantillon le long et autour de l'axe de ladite chemise tubulaire (2) lorsque ladite canne (9) est engagée dans ladite chemise (2).

8. Dispositif selon la revendication 7, caractérisé en ce que lesdits moyens de repérage comprennent un méplat (15) ménagé sur ladite canne (9), la position de ce méplat (15) étant déterminée de façon que celui-ci reste à l'extérieur de ladite chemise (2) lorsque la canne (9) est engagée dans cette dernière et ladite cavité (11) positionnée dans ladite zone de chauffage (3), la longueur de la canne (9) étant elle que dans cette position son extrémité engagée dans ladite chemise tubulaire (2) atteint sensiblement ledit orifice de sortie (6) des effluents.

9. Dispositif selon l'une quelconque des revendications 7 et 8, caractérisé en ce qu'un organe de manipulation (16), ou clé, s'adapte à l'extrémité de ladite canne (9) opposée à celle engagée dans ladite chemise tubulaire (2), ledit organe de manipulation (16) étant adapté à limiter l'enfoncement de cette canne (9) dans ladite chemise (2) en venant en butée contre ledit organe d'obturation (13).

10. Dispositif selon l'une quelconque des revendications précédentes, caractérisé en ce que ladite cavité (11) est de forme adaptée à recevoir l'échantillon (S) en couche de très faible épaisseur.

## Claims

1. A device which can be used in particular for pyrolysis of solid or liquid samples taken in small quantities comprising a tubular sleeve inside which a sample heating zone is defined, heating means and means for measuring the temperature in said zone, a sample holder adapted to be introduced into said tubular sleeve as far as said heating zone, said tubular sleeve having an effluent outlet orifice which is connected to at least one trap and/or apparatus for measuring and analysis, this device also comprising an orifice for introduction of a vector gas serving to entrain these effluents, said orifices being located on either side of said heating zone, said sample holder being associated with a rod which engages in said tubular sleeve, characterised in that there is a small annular space (10) for flow of the vector gas between said rod (9) and said sleeve (2), said rod exhibiting an elongated cavity (11) opening on the side wall of the rod in said annular space and adapted to receive the sample (S) and in that means (12, 13) for sealing and for positioning said cavity (11) in said tubular sleeve (2) are fitted to said rod (9) at one end of said tubular sleeve.

2. A device as in claim 1, characterised in that said tubular sleeve (2) and said sample holder rod (9) are disposed in a substantially horizontal direction, said cavity (11) receiving the sample (S) being placed so as to open upwards.

3. A device as in any one of the preceding claims, characterised in that said sealing and positioning means comprise a compressible ring (12) in which said rod (9) can slide, this ring (12) cooperating with a closing element (13) which can be locked, for example by screwing, to said end of said tubular sleeve (2), simultaneously forming the seal between said rod (9) and said sleeve (2) and immobilizing the sample (S) in a pre-selected position inside said tubular sleeve (2) by compression of said ring (12).

4. A device as in any one of the preceding claims, characterised in that said rod (9) can be moved between a first position in which said cavity (11) containing the sample (S) is located in a moderate temperature zone of said tubular sleeve and a second position in which said cavity is located in said heating zone (3).

5. A device as in claim 4, characterised in that cooling means, such as a radiator (14), are disposed at the level of said moderate temperature zone of said tubular sleeve (2).

6. A device as in any one of the preceding claims, characterised in that said tubular sleeve (2) exhibits a bore the wall of which is made of gold and in that said rod is also made of gold.

7. A device as in any one of the preceding claims, characterised in that said rod (9) comprises means for marking the position of said cavity (11) receiving the sample along and around the axis of said tubular sleeve (2) when said rod (9) is engaged in said sleeve (2).

8. A device as in claim 7, characterised in that said marking means comprise a flat (15) formed on said rod (9), the position of this flat (15) being determined so that the latter remains outside said sleeve (2) when the rod (9) is engaged in the latter and said cavity (11) positioned in said heating zone (3), the length of the rod (9) being such that in this position its end engaged in said tubular sleeve (2) essentially reaches said outlet orifice (6) for the effluents.

9. A device as in any one of claims 7 and 8, characterised in that a manipulating element (16), or key, is fitted to the opposite end of said rod (9) to that engaged in said tubular sleeve (2), said manipulating element (16) being adapted to limit the engagement of this rod (9) in said sleeve (2) by coming up against said closing element (13).

10. A device as in any one of the preceding claims, characterised in that said cavity (11) is of a adapted to receive the sample (S) in a very thin layer.

**Patentansprüche**

1. Vorrichtung, insbesondere benützbar für die Pyrolyse fester oder flüssiger in geringer Menge genommener Proben, mit einer röhrenförmigen Hülse, in deren Innerem eine Heizzone für die Probe definiert ist, Heizeinrichtungen und Meßeinrichtungen für die Temperatur in dieser Zone, einem Probenträger, der so ausgebildet ist, daß er in diese röhrenförmige Hülse bis zu dieser Heizzone einführbar ist, wobei die röhrenförmige Hülse eine Austrittsöffnung für die Abgase besitzt, die mit wenigstens einer Falle und/oder Meß- und Analysenvorrichtung verbunden ist, wobei die Vorrichtung ebenfalls eine Einführöffnung für ein Trägergas hat, das dazu dient, diese Abströme mitzureißen, wobei die Öffnungen zu beiden Seiten dieser Heizzone angeordnet sind und dieser Probenträger einer Stange zugeordnet ist, die in diese röhrenförmige Hülse greift, dadurch gekennzeichnet, daß zwischen der Stange (9) und dieser Hülse (2) ein verkleinerter Ringraum für die Strömung des Trägergases existiert, daß diese Stange einen länglichen Hohlraum (11) aufweist, der gegen die Seitenwand der Stange in diesem Ringraum sich öffnet und so ausgebildet ist, daß er die Probe (S) aufnimmt und daß Dichtungs- und Positioniereinrichtungen (12, 13) dieses Hohlraums (11) in dieser röhrenförmigen Hülse (2) an diese Stange (9) an einem Ende dieser röhrenförmigen Hülse angepaßt sind.

2. Vorrichtung nach Anspruch 1, dadurch gekennzeichnet, daß diese röhrenförmige Hülse (2) und diese Probenträgerstange (9) längs einer im wesentlichen horizontalen Richtung angeordnet sind, wobei dieser die probe (S) aufnehmende Hohlraum (11) derart angeordnet ist, daß er sich nach oben öffnet.

3. Vorrichtung nach einem der vorhergehenden Ansprüche, dadurch gekennzeichnet, daß die Dichtungs- und Positionierungseinrichtungen einen kompressiblen Ring (12) umfassen, in dem diese Stange (9) gleiten kann, wobei dieser Ring (12) mit einem beispielsweise durch Verschrauben verriegelbaren Verschlußorgan mit diesem Ende dieser röhrenförmigen Hülse (2) zusammenwirkt und gleichzeitig durch Kompression dieses Ringes (12) die Abdichtung zwischen dieser Stange (9) und dieser Hülse (2) sowie das Unbeweglichmachen der Probe (S) in einer vorgewählten Stellung im Inneren der röhrenförmigen Hülse (2) sicherstellt.

4. Vorrichtung nach einem der vorhergehenden Ansprüche, durch gekennzeichnet, daß diese Stange (9) zwischen einer ersten Stellung, in der dieser die Probe (S) enthaltende Hohlraum (11) in einer Zone gemäßigter Temperatur der röhrenförmigen Hülse sich befindet und einer zweiten Stellung, in der dieser Hohlraum in dieser Heizzone (3) sich befindet, verschiebbar ist.

5. Vorrichtung nach Anspruch 4, dadurch gekennzeichnet, daß Kühleinrichtungen wie ein Radiator (14) in Höhe dieser Zone gemäßigter Temperatur der röhrenförmigen Hülse (2) angeordnet sind.

6. Vorrichtung nach einem der vorhergehenden Ansprüche, dadurch gekennzeichnet, daß diese röhrenförmige Hülse (2) eine Bohrung aufweist, deren Wand aus Gold ist und daß diese Stange ebenfalls aus Gold ist.

7. Vorrichtung nach einem der vorhergehenden Ansprüche, dadurch gekennzeichnet, daß diese Stange (9) Einrichtungen zur Markierung der Position dieses die Probe längs und um die Achse dieser röhrenförmige Hülse (2) aufnehmenden Hohlraums (11), wenn diese Stange (9) in diese Hülse (2) greift, aufweist.

8. Vorrichtung nach Anspruch 7, dadurch gekennzeichnet, daß diese Markiereinrichtungen über eine auf dieser Stange (9) vorgesehene Abflachung (15) verfügen, wobei die Position dieser Abflachung (15) derart festgelegt ist, daß sie außerhalb dieser Hülse (2) bleibt, wenn die Stange (9) in diese letztere eingreift und diese Ausnehmung (11) in dieser Heizzone (3) positioniert ist, wobei die Länge der Stange (9) derart ist, daß in dieser Position ihr in diese röhrenförmige Hülse (2) eingreifendes Ende im wesentlichen diese Abströmaustrittsöffnung (6) erreicht.

9. Vorrichtung nach einem der Ansprüche 7 und 8, dadurch gekennzeichnet, daß ein Handhabungsorgan (16) oder Schlüssel an das Ende dieser Stange (9) angepaßt ist, die der gegenüberliegt, die in diese röhrenförmige Hülse (2) greift, wobei das Handhabungsorgan (16) so ausgebildet ist, daß es das Einfahren dieser Stange (9) in die Hülse (2) begrenzt, indem es in Anschlag gegen dieses Verschlußorgan (13) kommt.

10. Vorrichtung nach einem der vorhergehenden Ansprüche, dadurch gekennzeichnet, daß diese Ausnehmung (11) von einer Form ist, die so ausgebildet ist, daß sie die Probe (S) in einer Schicht sehr geringer Dicke aufnimmt.

**FIG.1**

**EP 0 169 102 B1**

FIG.2

FIG.3A

FIG.3B

FIG.4

FIG.4A

FIG.4B

EP 0 169 102 B1